(19) Europäisches Patentamt
European Patent Office
Office européen des brevets

(11) Publication number: **0 436 115 A2**

# (12) EUROPEAN PATENT APPLICATION

(21) Application number: **90122549.0**

(22) Date of filing: **26.11.90**

(51) Int. Cl.5: **C08G 59/20**, C08G 59/50, G02F 1/00

(30) Priority: **27.11.89 US 441783**

(43) Date of publication of application: **10.07.91 Bulletin 91/28**

(84) Designated Contracting States: **AT BE CH DE ES FR GB IT LI NL SE**

(71) Applicant: **THE DOW CHEMICAL COMPANY**
**2030 Dow Center Abbott Road**
**Midland, MI 48640(US)**

(72) Inventor: **Kester, John J.**
**14220 Timberedge**
**Colorado Springs, Colorado 80921(US)**

(74) Representative: **Huber, Bernhard, Dipl.-Chem. et al**
**Möhlstrasse 22 Postfach 860 820**
**W-8000 München 86(DE)**

## (54) Novel nonlinear optical materials.

(57) The present invention is directed to epoxy-based polymeric nonlinear optical materials in which a nonlinear optically active moiety or functionality forms the crosslink between polymer chains and a process for making the nonlinear optical (NLO) epoxy polymer including heating an epoxy resin and a curing agent such as a bi- or tri-functional aromatic amine containing an electron-withdrawing group, for example, diamino diphenylsulfone and poling the mixture under high voltage at elevated temperature for a period of time to bring about orientation of the nonlinear optical moieties in the polymer. The polymers have enhanced stability over polymers in which only one end of an NLO active moiety is attached to the polymer chain.

EP 0 436 115 A2

# NOVEL NONLINEAR OPTICAL MATERIALS

The present invention relates to novel nonlinear optical materials and polymeric organic materials which possess nonlinear optical properties. More particularly, the present invention relates to crosslinked epoxy polymeric nonlinear optical materials which can be useful in nonlinear optical devices, and to a process for preparing the epoxy polymeric nonlinear optical materials.

Information is more rapidly processed and transmitted using optical as opposed to electrical signals. There exists a need for finding nonlinear optical materials, and processes for preparing such materials, which alter the transmission of optical signals or serve to couple optical devices to electrical devices, that is, electrooptic devices.

Some materials which have been used in electrooptic devices include semiconductors such as lithium niobate, potassium titanyl phosphate and gallium arsenide and most recently, organic materials which have been doped with nonlinear optical materials. Generally, polymeric organic materials can or may have the specific advantages of fast response time, small dielectric constant, good linear optical properties, large nonlinear optical susceptibilities, high damage threshold, engineering capabilities, and ease of fabrication.

There are various known polymeric organic materials which possess specific nonlinear optical properties and various known processes for making such polymeric organic materials. Many of the current polymeric organic materials prepared by the prior art are prepared by blending a NLO molecule into a polymer host material. "Blending" herein means a combination or mixture of materials without significant reaction between specific components.

Nonlinear optical properties of organic and polymeric materials was the subject of several symposia, including the symposium sponsored by the ACS division of Polymer Chemistry at the 18th meeting of the American Chemical Society, September 1982. Papers presented at the meeting are published in ACS Symposium Series 233, American Chemical Society, Washington, D.C. 183. The International Society for Optical Engineering (SPIE) has sponsored a number of NLO related symposia, e.g. the symposium "Nonlinear Optical Properties of Organic Materials II" on August 10-11, 1989 (SPIE Proceedings Series, Vol. 1147, 1990). Similarly, the Materials Research Society has sponsored a symposium titled, "Nonlinear Optical Properties of Polymers" on December 1 through 3, 1987 (Materials Research Society Symposium Proceedings, Vol. 109, 1988).

EP Publication number 218,938, published April 22, 1987, discloses one method of making a polymer with nonlinear optical properties by incorporating molecules which have nonlinear optical (NLO) properties into a host polymer. The NLO molecules are incorporated into the host polymer by blending. The NLO molecules in the polymer can be aligned by an electric field while the temperature of the polymeric material is raised above its glass transition temperature and then cooled to room temperature. EP 218,938 discloses a number of polymer host materials, including epoxies, and many types of molecules which have NLO activity including azo dyes such as Disperse Red 1.

PCT Application WO8802131A, published March 24, 1988, also describes a method of blending a substance having nonlinear optical properties, such as 2-methyl-4-nitroaniline, into a commercially available curable epoxy resin polymer to prepare an electrooptical material.

It is also known to incorporate a NLO active group such as azo dye Disperse Red 1 (4,-[N-ethyl-N-(2-hydroxyethyl] amino-4-nitro azobenzene), by simply blending the azo dye in a thermoplastic material such as poly(methylmethacrylate), as described in Applied Physics Letters 49, 4 (1986). In this paper, an aromatic amine is disclosed but the amine is not covalently bonded to the polymer chain. In addition, the paper discloses an NLO molecule which has an electron donor and acceptor group at either end of the molecule.

A problem associated with a polymer with NLO properties produced by simply blending NLO molecules into a host polymer is that these polymer materials lack stability of orientation, that is, there is a great amount of molecular relaxation or reorientation within a short period of time resulting in a loss of NLO properties. For example, as reported by Hampsch et al., Macromolecules 1988, 21, 528-530, the NLO activity of a polymer with NLO molecules blended therein decreases dramatically over a period of days.

Generally, the incorporation of molecular structures which have NLO activity into the backbone of a polymer chain will decrease the likelihood of the structural reorganization in comparison with polymers in which the NLO active molecule is simply blended. It is therefore desirable to provide a polymer material with NLO groups covalently bonded to the backbone of the polymer material to minimize relaxation effects.

U.S. Patent No. 4,703,096, issued October 27, 1987, to Choe, discloses a polymer composition in which the NLO activity is derived from aromatic structures attached to a polymeric diacetylenic backbone. However, the synthesis of the material described in U.S. Patent No. 4,703,096 is complicated.

There is a continuing effort to develop new nonlinear optical polymers with increased nonlinear optical susceptibilities and enhanced stability of nonlinear optical effects. It would be highly desirable to have organic polymeric materials, particularly polymeric materials based on epoxy resins, with larger second and third order nonlinear properties than presently used inorganic electrooptic materials.

Amine curing agents have long been used as curing agents for epoxy resins. Amine curing agents are discussed in Lee and Neville, *Handbook of Epoxy Resins,* McGraw-Hill (1967), pages 8-1 to 8-18. Amine curing agents are also discussed in U.S. Patent Nos. 4,330,659, issued May 18, 1982, to King et al., 4,814,414, issued March 21, 1989, to Newman-Evans and 4,822,832, issued April 18, 1989 to Chu et al.

It is an object of the present invention to provide a nonlinear optical material as a curing agent for epoxy resins and epoxy resins cured with said nonlinear optical material.

Another object of the present invention is to provide crosslinked epoxy based polymers which exhibit nonlinear optical effects and which have enhanced stability of nonlinear optical effects.

One aspect of the present invention is a nonlinear optical material comprising a compound exhibiting nonlinear optical properties containing per molecule (a) at least two active hydrogen atoms attached to more than one nitrogen atom which is attached to an aromatic ring and (b) at least one divalent electron-withdrawing group attached to an aromatic ring.

Another aspect of the present invention is a nonlinear optical composition comprising the reaction product of:

(A) at least one compound containing an average of more than one epoxide group per molecule; and

(B) at least one curing agent for compound (A) whereby at least a portion of said curing agent (B) is at least a first curing agent which contains per molecule (a) at least two active hydrogen atoms attached to more than one nitrogen atom which is attached to an aromatic ring and (b) at least one divalent electron-withdrawing group per molecule.

Another broad aspect of the invention is a process for making the above compositions.

Still another aspect of the present invention includes devices having incorporated therein a nonlinear optical component of the above materials.

In its broadest scope, the present invention provides a nonlinear optically active material comprising a compound exhibiting nonlinear optical properties containing per molecule (a) at least two active hydrogen atoms attached to more than one nitrogen atoms which is attached to an aromatic ring and (b) at least one divalent electron-withdrawing group attached to an aromatic ring.

In one embodiment, the nonlinear optical material may have the following formula:

Formula I

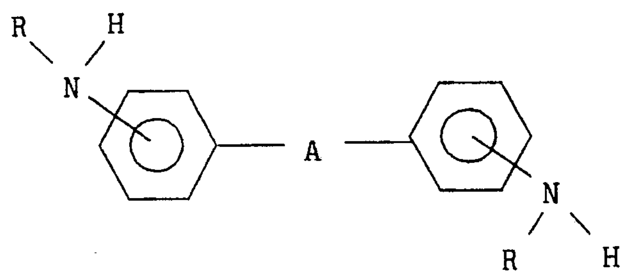

where A is a divalent electron-withdrawing group and each R is independently a hydrogen or an aliphatic, cycloaliphatic or aromatic hydrocarbyl group having from 1 to 12 carbon atoms.

In another embodiment, the nonlinear optical material may have the following formula:

Formula II

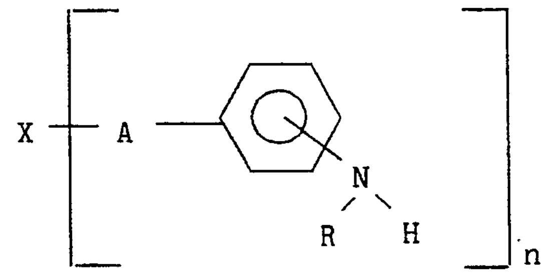

where A is a divalent electron-withdrawing group; n is 2 or 3; each R is independently a hydrogen or an aliphatic, cycloaliphatic or aromatic hydrocarbyl group having from 1 to 12 carbon atoms, with the proviso that at least two of the R groups must be active hydrogen atoms on different nitrogen groups; and X is a divalent or trivalent organic hydrocarbon, hetero-interrupted hydrocarbon, or substituted hydrocarbon radical or

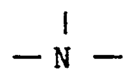

The term "electron-withdrawing" as employed herein refers to organic substituents which attract n-electrons from a conjugated electronic structure. Illustrative of electron-withdrawing substituents which are employed herein represented by A in the above formulae include, for example,

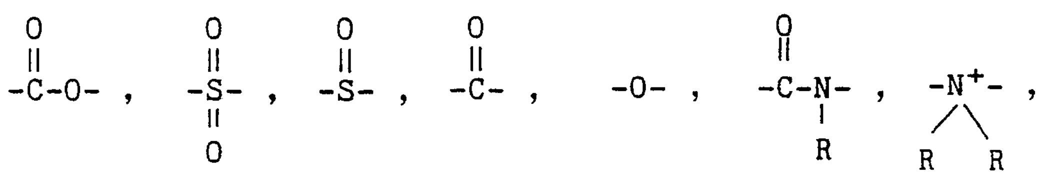

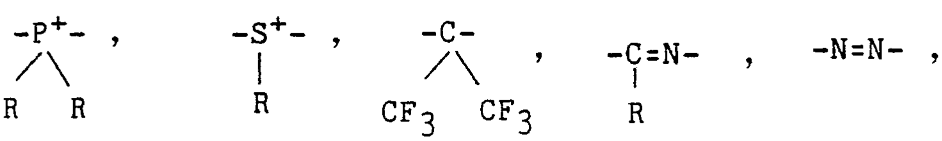

each R is independently a hydrogen or an aliphatic, cycloaliphatic or aromatic hydrocarbyl having from 1 to 12 carbon atoms.

The term "conjugating" group as employed herein refers to a group which has the ability to transfer charge from the electron-donating group to the electron-withdrawing group through a conjugated system of double bonds. Conjugating groups include groups which have, for example, a hydrocarbyl diradical composed of aromatic rings optionally linked by carbon-carbon, carbon-nitrogen, or nitrogen-nitrogen double bonds. This conjugating group may be substituted with pendant radicals such as alkyl, aryl, cyano, halo, and nitro.

The term "electron-donating" as employed herein refers to organic substituents which contribute n-electrons to a conjugated electronic structure. Illustrative of electron-donating substituents include for example, amino, alkyl-amino.

The present invention provides a nonlinear optical material which is a reaction product composition resulting from reacting, as a first component (A) at least one compound containing an average of more than one epoxide group per molecule with, as a second component (B) at least one curing agent for component (A). In accordance with the present invention, at least a portion of the curing agent (B) is advantageously at least one curing agent for compound (A) whereby at least a portion of said curing agent (B) is at least a first curing agent which contains per molecule (a) at least two active hydrogen atoms attached to more than one nitrogen atom which is attached to an aromatic ring and (b) at least one divalent electron-withdrawing group per molecule.

The nonlinear optical material composition of the present invention includes an epoxy-containing polymeric material having nonlinear optical moieties or functionalities chemically bonded to the resultant polymeric material. The nonlinear optical moieties are crosslinking groups attached to backbones of the polymeric material. The NLO crosslinking group of the present invention is a moiety with at least two ends having an electron-donating group (donor) with an electron-withdrawing group (acceptor) being in the middle. Both ends of the NLO active moiety are tied into a polymer chain to provide enhanced stability over other NLO moieties in which only one end is tied to the polymer backbone.

Because of the presence of a charge asymmetry in the polymer of the present invention, the present invention polymer with a noncentrosymmetric molecular configuration advantageously exhibits second order nonlinear optical susceptibility.

The crosslinking functionalities of the composition of the present invention are provided by the first curing agent which are preferably those curing agents described by the following general formula:

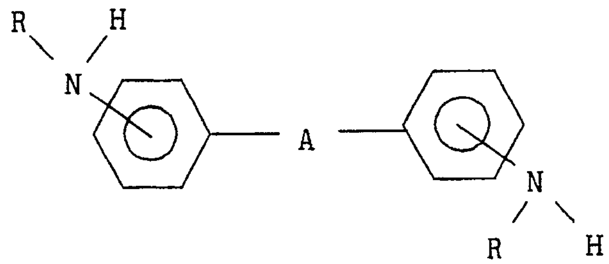

where A is a divalent electron-withdrawing group and each R is independently a hydrogen or an aliphatic, cycloaliphatic or aromatic hydrocarbyl having from 1 to 12 carbon atoms; or those curing agents represented by the following formula:

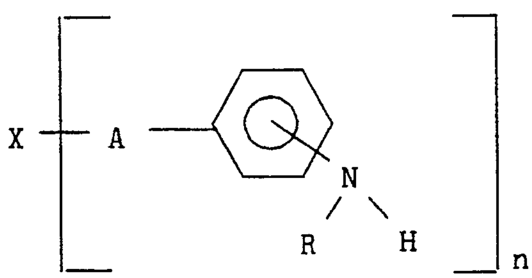

where A is a divalent electron-withdrawing group; n is 2 or 3; each R is independently a hydrogen or an aliphatic, cycloaliphatic or aromatic hydrocarbyl having from 1 to 12 carbon atoms, with the proviso that at least two of the R groups must be active hydrogen atoms on different nitrogen groups; and X is a divalent or trivalent organic hydrocarbon, hetero-interrupted hydrocarbon, or substituted hydrocarbon radical or

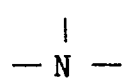

In a preferred embodiment, the electron-withdrawing group A in the above formulae is $SO_2$ or CO.

In accordance with one embodiment of the present invention a nonlinear optical material having the crosslinking functionalities of the above formulae is produced by reacting an epoxy-containing compound, as a first component (A), with a compound which provides a nonlinear optical molecule to the resultant product composition, as a second component (B).

The first component (A) of the present invention includes a wide variety of epoxy-containing compounds. Generally, the first component (A) is any compound having an average of more than one epoxide group per molecule. Preferably, the first component (A) is any compound having an average of more than one vicinal epoxide group per molecule. More preferably, the component (A) may be any compound

containing an average of more than one glycidyl group per molecule. Even more preferably, the component (A) can be glycidyl ethers, glycidyl esters or glycidyl amines.

Illustrative of the preferred glycidyl ethers used in the present invention are the glycidyl ethers of polyhydric phenols including for example, the glycidyl ethers of phenol or substituted phenol such as the aldehyde novolac resins particularly phenol-formaldehyde resins and cresol-formaldehyde resins. The glycidyl ethers of polyhydric phenols also may include the glycidyl ethers of bisphenols or substituted bisphenols such as the glycidyl ether of bisphenol A. Other examples of glycidyl ethers of polyhydric phenols useful in the present invention are described in U.S. Patent No. 4,330,659, for example diglycidyl ethers of bisphenols corresponding to the formula:

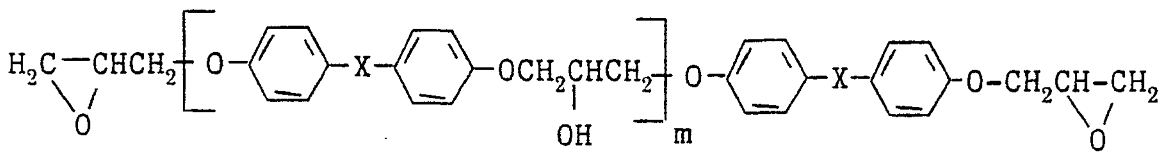

wherein m is from 0 to 50 and X is $-CH_2-$,

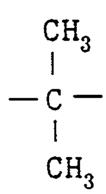 , 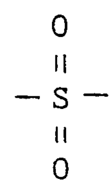 or 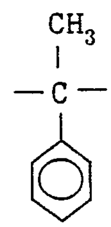

These formulas represent, respectively, bisphenols F, A, S and AP. Other applicable ethers include the diglycidyl ethers of resorcinol, catechol and hydroquinone. The various ethers may be substituted on the respective phenyl rings by such non-reactive substituents as alkyl and halogen. The glycidyl ethers of compounds having more than one aromatic hydroxyl group per molecule are disclosed in U.S. Patent No. 4,829,133, issued May 9, 1989, to Hefner, Jr. et al. The glycidyl ethers of hydrocarbon-phenol resins disclosed in U.S. Patent No. 4,710,429, issued December 1, 1987, to Bogan et al., may also be used in the present invention.

Component (A) of the present invention also includes di- or polyepoxides of aliphatic or cycloaliphatic compounds containing more than one epoxidizable unsaturated group, for example, the diepoxides of cyclohexadiene and butadiene.

The epoxy-containing compound suitably used herein can be a monomer, oligomer or polymer resin. Epoxy monomers and oligomer units suitably used herein are described in the Encyclopedia of Chemical Technology, Vol. 9, p. 267-290, published by John Wiley & Sons, 1980. Examples of the epoxy resins suitably used herein include novolac epoxy resins such as cresolnovolac epoxy resins and epoxy phenol novolac resin; bisphenol-A epoxy resins such as diglycidyl ethers of bisphenol A; cycloalkyl epoxy resins; glycidyl amine resins; triazine resins; hydantoin epoxy resins and combinations thereof.

Some commercial epoxy resins useful in the present invention include, for example, D.E.R.TM 331, D.E.R.TM 332, D.E.R.TM 383, D.E.N.TM 431 and D.E.R.TM 736, all commercially available from The Dow Chemical Company.

Any combination of the aforementioned epoxy-containing compounds may be used herein. Therefore, another embodiment of the present invention is the use of a mixture or a blend of epoxy-containing compounds as component (A). The epoxy compositions may contain the same or other moieties with electron-withdrawing groups.

The epoxy compound used herein may be an epoxy compound which does not exhibit a NLO response or an epoxy compound which does exhibit a NLO response. For example, an epoxy compound which exhibits an NLO response and which may be used in the present invention may be an epoxy compound described in U.S. Patent Application Serial No. 07/441,805, filed November 27, 1989, by Kester et al. An example of an epoxy compound, disclosed in U.S. Serial No. 07/441,805, which exhibits an NLO response

and may be used herein is tetraglycidylsulfonyldianiline.

A solvent may be used, if desired, to dissolve an epoxy compound for example when using certain solid epoxy resins. Suitable solvents which can be employed herein include, for example, glycol ethers, ketones, aromatic hydrocarbons, alcohols, amides and combinations thereof. Particularly suitable solvents employed herein include, for example, methyl ethyl ketone, acetone, methanol, dimethylformamide, ethylene glycol methyl ether, propylene glycol methyl ether and combinations thereof.

The second component (B) of the present invention is a curing agent for component (A). At least a portion of the curing agent (B) is advantageously at least a first curing agent compound which is a compound exhibiting nonlinear optical properties containing per molecule (a) at least two active hydrogen atoms attached to more than one nitrogen atom which is attached to an aromatic ring and (b) at least one divalent electron-withdrawing group.

Component (B) of the present invention may comprise substantially the first curing agent compound or component (B) may be a mixture of two or more curing agents wherein at least a portion of component (B) is at least one first curing agent and the remainder of component (B) is one or more second curing agent compounds.

Suitable second curing agent compounds which can be employed herein include, for example, amines, acids or anhydrides thereof, biguanides, imidazoles, urea-aldehyde resins, melamine-aldehyde resins, phenolics, halogenated phenolics, sulfides and combinations thereof. These and other curing agents are disclosed in Lee and Neville's *Handbook of Epoxy Resins,* McGraw-Hill Book Co., 1967. Particularly suitable curing agents include, for example, dicyanodiamide, diaminodiphenylsulfone, 2-methylimidazole, diethylenetoluenediamine, bisphenol A, tetrabromobisphenol A, phenolformaldehyde novolac resins, halogenated phenolformaldehyde resins, hydrocarbon-phenol resins and combinations thereof.

The amines suitably employed herein can be multifunctional aliphatic, such as, diethylene triamine or triethylenetetramine, or aromatic amines, such as, metaphenylene diamine or methylene dianiline. Some commercial curing agents useful in the present invention include D.E.H.TM 20 and D.E.H.TM 24 commercially available from The Dow Chemical Company.

The second curing agent compound may be a compound which does not exhibit a NLO response or a compound which does exhibit a NLO response. For example, a second curing agent compound which exhibits a NLO response and which may be used in the present invention may be a compound described in U.S. Patent Application Serial No. 07/441,731, filed November 27, 1989, by J. J. Kester. An example of a second curing agent disclosed in U.S. Serial No. 07/441,731 which exhibits a NLO response and may be suitably used herein is p-nitroaniline.

Examples of other second curing agents which can be used in the present invention include, for example, the amines disclosed in U.S. Patent Numbers 4,659,177 issued April 21, 1987, to Choe et al., 4,707,303 issued November 17, 1987, to Buckley et al., and 4,707,305 issued November 17, 1987, to Choe et al., such as quinodimethane compounds, diphenoquinodimethane compounds and naphthoquinodimethane compounds.

The compositions of the present invention advantageously exhibit a nonlinear optical response. The nonlinear optical material of the present invention comprises an epoxy resin based composition having nonlinear optical moieties chemically bonded to the resultant polymer. The nonlinear optical moieties of the epoxy polymer are crosslinking groups attached to the backbone of the polymeric material.

Generally, the first curing agent of the present invention which contains a strong electron-withdrawing group will have a reduced reactivity towards epoxy resin reactions. A catalyst is, therefore, preferably used to facilitate the reaction without degradation or homopolymerization of the resin. A quantification of the level of electron-withdrawing capability is given by the Hammett $\sigma$ (sigma) constant. This well known constant is described in many references, for instance, J. March Advanced Organic Chemistry (McGraw-Hill Book Company, New York, 1977 edition) p. 251-259. The Hammett constant values range from an electron-donating group $\sigma_p$ = -0.66 for $NH_2$ to an electron-withdrawing group $\sigma_p$ = 0.78 for a nitro group. ($\sigma_p$ indicating para substitution.)

The type of electron-withdrawing groups useful in the present invention are, preferably, any substituent which has a positive Hammett constant. More preferably, a Hammett constant of $\sigma_p > 0.52$, and even more preferably a Hammett constant of $\sigma_p > 0.63$ (which is the constant for a cyano substituent) is used in the present invention.

Generally, the amounts of components (A) and (B) employed herein are sufficient to provide a cured product. Usually the amounts of components (A) and (B) which provide a ratio of equivalents of curing agent per epoxy groups of from 0.5 to 1.2; preferably from 0.75 to 1.1 and more preferably from 0.95 to 1.05 are used herein.

The percentage of first curing agent should be sufficient to provide the final cured product with NLO

properties. Generally the percent of first curing agent used herein may be from 0.1 percent to 100 percent with respect to the stoichiometry of the epoxy groups. It is preferable to use at or near 100 percent of the first curing agent. The percentage of the second curing agent used may be the remainder if anything less than 100 percent of the first curing agent is used, for example, from 0 to 99.9 percent.

Various factors will effect the range of the percentage of first and second curing agents relative to the number of epoxy groups. These factors include the optical absorption of the NLO group, the level of stability required, and the strength of the NLO group. In general, the level of addition of NLO moieties to polymer will be as high as possible to maximize the NLO effect. The level at addition will be balanced by the stability and quality of the film desired to be produced.

In carrying out one embodiment of the process of the present invention, component (A), for example, an epoxy-containing compound is reacted with component (B), for example, an aromatic amine compound under reaction conditions to form the composition of the present invention. For example, a class of anisotropic polymers is produced from reacting an epoxy resin with the monomers of Formulae I and II.

To fully incorporate a first curing agent having a strong electron-withdrawing group, a catalyst is advantageously used in the present invention. The reaction may be carried out in the presence of a catalyst to facilitate opening of the oxirane ring. For example, the catalyst can be 2-methyl imidazole. The reaction may be carried out in the presence of a catalyst because of the relative unreactivity of the aromatic amines of the first curing agent containing electron-withdrawing substituents.

Catalysts which are suitably used here include, for example, tetrabutylphosphonium acetate, boron trifluoride monoethylamine, benzyldimethyl amine, and 2-methyl imidazole. The catalyst 2-methyl imidazole is the most preferred because it tended to work without introducing additional ionic species into the product material. The reduction of ionic species in the polymer material is important for its reduction of conductivity which can lead to a catastrophic breakdown during the orientation process of the polymer product.

Suitable catalysts or promoters or accelerators which can be employed in the preparation of the compositions of the present invention may include, for example, tertiary amines, imidazoles, phosphonium compounds, ammonium compounds, sulfonium compounds and mixtures thereof.

Suitable tertiary amines include, for example, triethylenediamine, N-methylmorpholine, triethylamine, tributylamine, benzyldimethylamine, tris(dimethylaminomethyl)phenol and mixtures thereof.

Suitable imidazoles include, for example, 2-methylimidazole, 1-propylimidazole and mixtures thereof.

Suitable phosphonium compounds include, for example, those disclosed by Dante et al. in U.S. Patent No. 3,477,990, issued November 11, 1969, Perry in Canadian Pat. No. 893,191, issued February 15, 1972, and U.S. Patent No. 3,948,855, issued April 6, 1976, and by Tyler, Jr. et al. in U.S. Patent No. 4,366,295, issued December 28, 1982.

Suitable quaternary ammonium compounds include, for example, benzyl trimethyl ammonium chloride, benzyl trimethyl ammonium hydroxide, tetrabutyl ammonium chloride, tetrabutyl ammonium hydroxide and mixtures thereof.

The reaction condition used in the present invention will vary depending on the particular reactants used. Generally, the reactants, that is, components (A) and (B) are mixed together to form a solution and then heated to a temperature such that the components will react. The reaction process of the present invention is preferably carried out at a temperature of from room temperature (about 20 °C) to 300 °C and more preferably from room temperature to 250 °C. Above 300 °C degradation of the epoxy polymer may occur and below room temperature no reaction may occur. Optionally, the reactants are degassed to less than about 1 x $10^{-2}$ torr (1.3 Pa). The degassing is preferred to remove bubbles and moisture which may degrade the final product. The degassing is generally carried out at a temperature at which the reactants have a reduced viscosity. While the degassing temperature depends on the reactants used, generally the degassing temperature is below the temperature of sublimation of reactants or below the reaction temperature. The reaction process of the present invention is preferably carried out under an inert atmosphere such as nitrogen. The reaction mixture is heated under nitrogen until a substantially polymerized product is obtained. Generally, the period of time for the reaction depends on the kinetics of the particular reactants, but preferably the reaction time is less than 5 hours and more preferably less than 1 hour. The reacted mixture is then cooled to room temperature for use.

As an illustration of another embodiment of the process of the present invention, a prepolymer is first prepared by reacting component (A) with less than 100 percent of a first curing agent and then reacting the prepolymer with a second curing agent.

The second curing agent compound may be used to substantially completely react a prepolymer which has been prepared by reacting less than 100 percent of a first curing agent (an NLO molecule) with an epoxy resin. It is possible to completely use the prepolymer by continuing homopolymerization brought about by a catalyst. The prepolymer may be fully cured using a second curing agent such as

metaphenylinediamine, because the final product exhibits certain improved properties obtained by using the second curing agent such as greater stability and higher glass transition temperature. The prepolymer may be used, for example, to provide a final product with improved properties such as film quality, optical clarity and stability. A sufficient amount of the second curing agent is added to the prepolymer to substantially react all of the remaining epoxy groups.

The present invention provides a thermoset polymeric composition with good thermal stability and resistance to chemical attack. It is also advantageous to provide epoxy based polymers having NLO properties because epoxy based polymers per se have heretofore been shown to have resistance to chemical attack. This property is provided by the crosslinking of the polymeric chains during polymerization.

The polymeric material of the present invention generally contains a glass transition temperature of from 90°C to 300°C, preferably above 140°C and more preferably above 160°C.

The present invention provides a composition with nonlinear optical properties with improved stability. The increased stability arises from the incorporation of a NLO group into the backbone of a polymer as opposed to blending a molecule with electron-withdrawing groups with a polymer host.

The epoxy based thermoset compositions of the present invention can be in the form of sheets, films, fibers or other shaped articles by conventional techniques. Generally, films are used in testing, electrooptic devices and waveguide applications.

A film can be prepared, for example, by constraining a mixture of components (A) and (B) between two planar substrates and then polymerizing the mixture to form a thin film. The films used for testing, electrooptic devices and waveguides should be thin films. Generally, the film has a thickness of from 500 Angstroms to 500 microns. Preferably, the thickness of the film is from 1 micron to 25 microns.

The mixture of epoxy resins reacted with a first curing agent (aromatic amines with electron-withdrawing groups), possibly with the addition of other curing agents is placed on a surface to make a film. The film may be produced in a number of ways. For many prepolymer mixtures with low viscosity a substrate is required. The mixture may be spread over the surface by compression with another substrate, dip, spray, or spin coating. Thermal processing of the mixture disposed on a substrate and the ultimate thermal and mechanical properties of the resultant polymer is dependent on the type of epoxy resin and curing agent utilized. The degree of stability required will then determine the type of polymer components needed. The techniques for mixing and polymerizing are similar to those known in the art. One aspect of the polymerization which improves the mechanical properties of the film is the schedule of temperature ramping of the mixture to its final cure temperature. By staging the cure at intermediate temperatures the optimal network structure is obtained. Retaining the final cure temperature for a period of hours is often necessary for the most complete polymerization possible. The long term chemical and mechanical stability of the final polymer will be dependent on the network formed.

After the polymerization of the mixture, the resulting film is oriented to produce a film with a net anisotropic structure needed for second harmonic generation. Orientation of the film is provided by applying an external field to the film.

The term "external field" as employed herein refers to an electric, magnetic or mechanical stress field which is applied to a substrate of mobile organic molecules to induce dipolar alignment of the molecules parallel to the field.

For example, application of a DC electric field produces orientation by torque due to the interaction of the applied field and the net molecular dipole moment. AC and magnetic fields also can effect alignment. Mechanical stress induced alignment includes a physical method such as stretching a thin film or a chemical method such as coating a liquid crystalline surface with an aligning polymer such as nylon.

The orientation can be achieved by corona poling or parallel plate poling. For parallel plate poling the film must be near and parallel to two electrodes with a large potential difference while the polymer is near to or above its glass transition. The electrodes can be associated with the substrate used for the formation of the film. For example, the substrate can be coated with a layer of indium-tin-oxide. If there are ionic impurities in the polymer mixture then the electrodes may be shielded with dielectric layer to prevent electrical breakdown. To obtain free standing films after the orientation process, a release layer is often deposited on the substrate before the mixture is placed onto it. Other configurations involving air or vacuum gaps can also be used. The electric field continues to be applied until the temperature of the polymer is reduced to room temperature. This allows for the relaxation of the polymer to its highest density while still having the field applied. This densification should reduce any relaxation due to mobility of pendant side-chains within voids in the polymer.

Generally, in preparing NLO materials with second order susceptibility, $X^{(2)}$, the NLO functionalities in the polymer must have a net alignment for the polymer to exhibit NLO properties. Typically, an electric field

is applied to orient the moieties in the polymer for nonlinear optical effect. This type of orientation is referred to herein as electric field poling, parallel plate poling, or poling. Other conventional methods for the orientation of the NLO moieties can be carried out by corona poling or through stretching the polymer.

In electric field poling, the polymeric material is raised above its glass transition temperature, Tg, because in this state, large molecular motion is enhanced, and the nonlinear optic moieties can give a net orientation. However, orientation of the polymer has also been observed to occur below the Tg. An intense electric field is then applied to the polymeric composition to align the nonlinear optic moieties. Electric field strengths of between 0.05 to 1.5 megavolts per centimeter (MV/cm) can be applied. The film is then cooled to room temperature with the electric field still applied. The field is then removed, resulting in a system where the nonlinear optical moieties are aligned within the polymer matrix.

The orientation of the anisotropic units within the film can occur during or after polymerization. One method of orientation includes applying an electric field to a polymer film which has previously been prepared and polymerized.

Another method of orientation of the polymer of the present invention for producing nonlinear optical materials, includes polymerizing the polymer while the polymer is under an electric field such that the nonlinear optical moieties are aligned in the electric field before complete polymerization of the polymer takes place. This method of orientation will allow less stress on the ultimate polymer chain than if the electric field is applied after the NLO moieties are incorporated into the backbone of the polymer.

Another method for preparing thin films for nonlinear optical applications includes annealing of the polymer while simultaneously poling the polymer which will allow relaxation of the polymer around the oriented molecule. After the temperature of a polymer has been raised to above the Tg and the polymer has been poled, the temperature is reduced from 10° C to 30° C below the Tg and maintained at this lower temperature to allow for densification. This "annealing" step is carried out so as to cause a reduced free volume in the film and thus less room for NLO moieties to randomly reorient themselves which can lead to a decrease in the NLO signal. Thus, this annealing process during polymer orientation may advantageously improve the stability of the polymer.

The nonlinear optical response of a polymer is determined by the susceptibility of the polymer to polarization by an oscillating electromagnetic field. The most important polarization components of a medium in contact with an electric field are the first order polarization components, that is, the linear polarization, the second order polarization, that is, the first nonlinear polarization, and the third order polarization, that is, the second nonlinear polarization. On a macroscopic level this can be expressed as:

$$P = x^{(1)}E(\omega_1) + x^{(2)}E(\omega_1)E(\omega_2) + x^{(3)}E(\omega_1)(\omega_2)(\omega_3)$$

where

P is the total induced polarization

E is the electric field at the frequency ($\omega_i$), and

$x^i$ are the susceptibility tensors for the linear, and first and second order nonlinear component of the polarization.

Specific components of the susceptibility tensor can be related to measurable coefficients. For second harmonic generation the second harmonic coefficient $d_{ijk}$ is defined by:

$$d_{ijk}(-2\omega;\ \omega,\ \omega) = (1/2)\ x_{ijk}(-2\omega;\ \omega,\ \omega)$$

Because of the degeneracy of two of the fields in second harmonic generation, the standard notation for writing this coefficient is $d_{iu}(-2\omega;\ \omega,\ \omega)$. For the specific case where polymer films are oriented with their anisotropic components normal to the film surface the coefficient $d_{33}$ can be determined as detailed in Applied Physics Letters 49, p. 248-250 (1986). From a knowledge of the susceptibilities the molecular polarizabilities can be calculated if the molecular dipole moment, the number density of the nonlinear molecules, the internal electric field, and correction factors for local field effects are known. This calculation, also detailed in the above article, allows the determination of the first order hyperpolarizability, ß, and the second order hyperpolarizability, y. To achieve a significant second order polarization it is essential that the nonlinear medium exhibit second order susceptibility, $x^{(2)}$, greater than $10^{-9}$ esu. To achieve a significant third order polarization it is essential that the nonlinear medium exhibit third order susceptibility, $x^{(3)}$, greater than $10^{-13}$ esu.

A number of optical tests can be used to evaluate the nonlinear optical properties of the poled polymer films of the present invention. For example, the second order susceptibility components of the polymer can be tested by measuring the linear Pockels electro-optic effect, second harmonic generation (SHG), or frequency mixing. For example, the third order susceptibility components of the polymer can be measured by third harmonic generation (THG), nonlinear mixing, Kerr effect, degenerate four wave mixing, intensity dependent refractive index, self-focusing, quadratic Kerr electro-optic effect, and electric field induce second harmonic generation. Such optical tests and procedures are well known to those skilled in the art.

The Maker fringe technique is a conventional procedure used herein to determine the second order susceptibility properties of films. In accordance with this test procedure, the magnitude of the intensity of the light generated at the second harmonic of the incident frequency by the polymeric film sample can be measured as a function of the incident angle of the light irradiating the sample surface. If the film is oriented such that the anisotropic groups have a net orientation normal to the surface the largest second harmonic coefficient, $d_{33}$, can be determined using p-polarized incident radiation.

Typically a Q-switched Nd:YAG laser which emits electromagnetic radiation at 1.064 microns, has a pulse half width of 14 ns, a repetition rate of 10 Hz, and is p-polarized, is focused onto a sample on the rotation axis of a rotary stage. The light emitted from the sample is filtered to remove the incident frequency and a spike filter centered near the second harmonic to allow passage of substantially only the second harmonic. Typically, the spike filter is centered at 530 nm and has a half width of 10 nm. The light is detected by a photomultiplier and averaged by a boxcar which is triggered by the incoming laser pulse. The averaged output of the boxcar was collected by a computer as a function of the angle of incidence of the incident beam on the sample.

The second harmonic coefficient is calculated using the equations described in Applied Physics Letters 49, page 248-250 (1986) by K. Singer et al. The incident energy density on the sample is obtained by calibration with a known quartz sample. A Y cut quartz slab is placed on the rotation stage in the same position as the polymer sample to be tested. The energy density is calculated from the given equations knowing the coefficient $d_{11} = 1.1 \times 10^{-9}$ esu. The intensity as a function of incident angle for the polymer test sample is then fit by the computer with the additional information of incident energy density, film thickness, and indices of refraction at the incident and second harmonic wavelength collected. By fitting this data to known equations a value of energy density is obtained. This is used to fit the data for a polymeric sample. For example, the index of refraction of the film at 1.064 micron wavelength is input as 1.57 and the index at 532 nanometers is input as 1.55.

A polymeric sample film is positioned on a rotation stage and illuminated by a beam from a Nd:YAG laser with a 10 nanosecond pulse width and a repetition rate of 30 Hz. The beam energy is reduced to 0.02 millijoules/pulse and focused to a spot of approximately 100 microns in diameter. The incident beam having a wavelength of 1.064 microns is filtered to remove any higher frequencies and polarized for p-polarized incidence on the sample. The transmitted radiation through the sample is filtered to remove any radiation at 1.064 microns. This filtered radiation illuminated a photomultiplier tube. The signal is averaged by a boxcar averager and sent to a computer. The sample is rotated on an axis perpendicular to the incident light and the transmitted radiation is monitored as a function of incident angle.

The polymers of the present invention have high stability (both thermal and chemical). An important feature of the NLO polymers derived from epoxy resins of the present invention is an added stability of the NLO signal of said polymers because the NLO groups are covalently bound into the polymer chain. This improvement of the stability is related to the level of crosslinking of the polymer chain.

Enhanced stability may be determined by observing the decay of the NLO capabilities as a function of time at room temperature. However, this determination may be very time consuming. A more straight forward approach to determining stability is to observe the NLO signal at room temperature after exposure to elevated temperatures for periods of time necessary to allow relaxation of the NLO effect. It has been found that the relaxation of the NLO effect is very rapid and the level is dependent on the temperature. The higher the temperature before relaxation of the NLO effect the more stable the polymer will be at room temperature. It is possible to calculate an activation energy for the relaxation of a particular NLO polymer. Another measure of the stability of a polymer's NLO effect is the ability to retain a certain percentage of its original NLO activity after exposure to an elevated temperature. One standard percentage would be 67.5 percent of the original value. The definition of a "stable" NLO polymer herein means the polymer's ability to retain greater than 67.5 percent of its original NLO activity after exposure to a specified temperature for 15 minutes.

Nonlinear optical materials have many potential applications using harmonic generation for shifting laser light to shorter wavelengths, parametric oscillation for shifting laser light to longer wavelengths, phase conjugation (four-wave mixing), and sum frequency generation for applications such as modulation and switching of light signals, imagining/processing/correlation, optical communications, optical computing, holographic optical memories, and spatial light modulators.

The films of the present invention are particularly useful in the electronic and communications fields to alter incident electromagnetic waves by the optical properties of the films. More particularly, the films of the present invention are used for waveguides and electrooptic modulators.

In another embodiment of this invention, there is provided an electrooptic light modulator or optical parametric device with a (noncrystalline second order) polymeric nonlinear optical component and a means

for providing an optical input to and output from said component. The component comprises an optically transparent medium of a polymer characterized by the reaction products of an epoxy resin compound (A) and a curing agent compound (B) whereby at least a portion of the curing agent (B) is at least a first curing agent exhibiting nonlinear optical properties which contains per molecule (a) at least two active hydrogen atoms attached to more than one nitrogen atoms which is attached to an aromatic ring and (b) at least one divalent electron-withdrawing group. When the device is employed in an electrooptic mode it includes means for applying an electric field and/or optical input to said element for altering an optical property.

One problem in obtaining an optically nonlinear medium for device applications is the difficulty in providing stable uniform crystalline structures and thin films of such materials in a manner suitable for integrated devices. A medium has been developed which is used in electrooptic and optical parametric devices which provide improved stability by means of incorporation of NLO active functionalities into the backbone of noncrystalline epoxy based polymers.

The basis for any nonlinear optical device is the nonlinear optical medium therein. It has been found that to obtain a long lived polymeric medium comprising an oriented second order nonlinear material the NLO active component must be bound into the polymer chain to provide the stabilization to thermal forces which would randomize the orientation. Such a nonlinear optical medium can be prepared directly on a desired substrate or can be a free standing film or tape. It may be noted that this optically nonlinear medium can be utilized as an optical waveguide incorporated into electrooptic devices.

Media which can be used in electrooptic devices are described in the following examples. The films suitable for use in electrooptic devices may be either free standing or on substrates. The substrates may be rigid as in the case of glass, quartz, aluminum, silicon wafer, or indium-tin-oxide coated glass. For use in waveguide devices the NLO medium must be adjacent to another medium suitable for waveguiding conditions, for example, other polymeric materials with a lower index of refraction, such as, fluorinated hydrocarbon materials, or quartz or glass substrates. Electrodes of conductive material with a higher index of refraction may be coated with polymeric materials of lower index to allow electrooptic modulation.

The following examples are for illustrative purposes only and are not to be construed as limiting the scope of the invention in any manner.

Examples 1-4

These examples illustrate the preparation of a film exhibiting nonlinear optical response.

5.39 g of diglycidyl ether of bisphenol A (DGEBA) having an epoxide equivalent weight (EEW) of 180.5 was combined with 1.85 g of diamino diphenyl sulfone (DADS) having an amine equivalent weight of 62.1 in a 100 mL boiling flask. The mixture was heated briefly under vacuum to about 160° C to allow dissolution of the DADS in the epoxy resin. This heating was done under a reduced pressure of $10^{-2}$ torr (1.3 Pa) to remove volatile materials, such as, water and to degas the mixture as it was cooled to near room temperature. This mixture was dispersed onto a substrate to form a film. The substrate was an indium-tin-oxide (ITO) coated glass in which the ITO film was overcoated with a dielectric layer to reduce the current across the sample during the poling process. The dielectric coating was itself overcoated by a plasma polymerized film of tetrafluoroethylene. The epoxy mixture was dispersed onto the dielectrically coated substrate. Another dielectrically coated substrate was placed on top of the substrate with the polymer dispersed on its surface with the two dielectrically coated electrodes facing one another. In addition, a 25 micron spacer layer was placed between the electrodes so that a uniform thickness film could be obtained and the entire assembly was held together with spring clamps. This assembly was heated in an oven to about 220° C for 2 hours. As the assembly was cooled a voltage was applied across the sample to orient the NLO functionalities. The voltage was increased to produce an electric field strength in the epoxy mixture of about 600,000 V/cm. The sample was cooled slowly to room temperature to allow the sample to anneal and densify. The polymerized sample was removed from the substrates and tested for second harmonic generation capability by the Maker fringe technique. The second harmonic coefficient was determined by calibrating the input energy density with a quartz crystal, knowing the film thickness, and the index of refraction at the incident frequency of 1.064 microns and the second harmonic frequency of 532 nm. The indices of refraction was determined by fitting the refractive index data taken with a variable wavelength Abbe refractometer for a similarly prepared sample. The index at 1.064 microns was 1.606 and the index at 532 was 1.632. The $d_{33}$ value was about 8 x $10^{-9}$ esu.

Table 1 shows Example 1 (Sample 3) and other samples prepared using the same stoichiometric ratios of DGEBA resin and DADS curing agent as in Sample 3. The samples were poled at different field strengths. Table 1 shows the prepared sample poled at different field strengths and the measured value of the second harmonic coefficient $d_{33}$.

Table 1

| Sample # | Electric Field (megavolt/cm) | SHG Coefficient ( esu) |
|---|---|---|
| 1 | 0.3 | $4.0 \times 10^{-9}$ |
| 2 | 0.3 | $5.5 \times 10^{-9}$ |
| 3 | 0.6 | $8.2 \times 10^{-9}$ |
| 4 | 0.7 | $1.05 \times 10^{-8}$ |

This table shows the approximately linear response of the susceptibility to the electric field strength and intercept near the origin.

## Example 5

### A. Production of Sample

A mixture of DGEBA and DADS was prepared with a stoichiometric ratio of resin and curing agent similar to that described in Example 1. The mixture was heated briefly to about 160 °C to dissolve the DADS into the epoxy resin. This mixture was added to propylene glycol methyl ether (Dowanol PM™ obtained from The Dow Chemical Company) in a ratio of about 1:4 by weight. A quartz substrate having a thickness of about 125 microns was cleaned and dipped into and pulled out of this mixture at a rate of about 2 mm/sec. The solution of resin and curing agent was washed from one side of the quartz substrate with a solvent. The coated substrate was placed in a clean room oven at 100 °C for one hour and 160 °C for one hour. The coated substrate was then placed in a vacuum oven at a pressure of at least $10^{-2}$ torr (1.3 Pa) for one hour. The glass transition of similarly prepared polymer samples is at least 210 °C. The polymer coated quartz substrate was then placed between two parallel electrodes with a 0.5 micron polyimide spacer adjacent to the polymer side of the quartz substrate to prevent the electrode from contacting the polymer surface. The temperature of the sample was poled at about 250,000 V/cm. The temperature of the sample was slowly reduced to room temperature to allow the sample to anneal and densify. After a period of about 4 hours the field was removed. The sample was removed from between the electrodes for further testing.

### B. Waveguiding Properties

The sample obtained in A above was tested for its waveguiding capabilities. The sample was placed in a holder on a rotation stage. A coupling prism was pressed against the polymer side of the polymer coated quartz substrate in a manner similar to that described in the Proceedings SPIE edited by G. Khanarian, volume 971, page 218 and other references therein. A laser beam having a wavelength of 0.6471 microns and a transverse electric (TE) polarization was directed at the coupling prism so as to efficiently launch a waveguiding mode. The zeroth, first and second order modes were observed at the coupling angles 26.97, 22.45 and 17.6, respectively. The losses in this film due to scattering and absorption were estimated to be less than 1 db/cm.

### C. Nonlinear Optical Properties

The sample obtained in A above was tested for its nonlinear optical capabilities using the Maker fringe technique. The sample was tested similarly to that described in Example 1. The polymer coated substrate was affixed to a stainless steel holder which fits onto the rotation stage. The sample was illuminated by a focused laser beam having a 1.064 micron wavelength, an intensity at the sample of less than 0.02 millijoules per pulse, and p-polarization. The sample was rotated about an axis perpendicular to the incident beam. The second harmonic light emitted from the sample as a function of incident angle was detected by

a photomultiplier and collected by a boxcar which was synchronized to the laser pulse. The averaged output of the boxcar was collected by a computer and fit to a function to determine the $d_{33}$ value as described by K. Singer in Applied Physics Letters 49, p 248-250 (1986). The energy density incident on the sample was determined by the response of a Y $\overline{cut}$ quartz sample having a $d_{11}$ = 1.1 x $10^{-9}$ esu placed in the same position as the sample immediately before testing. Using an index of refraction at 1.064 microns of 1.60 and an index at 532 nm of 1.63, and a thickness of about 1 micron the $d_{33}$ was determined to be about 6 x $19^{-9}$ esu.

D. Stability of the NLO Properties

The second harmonic generation coefficient for the sample obtained in A above was constant at room temperature over a period of 3 days. The second harmonic generation coefficient of the sample was then measured at room temperature after exposure to elevated temperatures for 20 minutes. The sample was removed from the testing apparatus but left affixed to the stainless steel holder so that the same point in the sample can be repeatedly tested after thermal exposure. The sample was placed in an oven and allowed to equilibrate at a particular temperature for 20 minutes. The sample was then removed from the oven and the second harmonic generation coefficient was measured after the temperature returned to room temperature. Table 2 shows the second harmonic coefficient after exposure to elevated temperature relative to its initial value. In accordance with the present definition of "stable" polymer herein, this polymer is stable up to 150 °C.

Table 2

| Temperature (°C) | Second Harmonic Coefficient (esu) |
|---|---|
| 22 | 6.2 x $10^{-9}$ |
| 50 | 5.9 x $10^{-9}$ |
| 80 | 5.8 x $10^{-9}$ |
| 125 | 4.4 x $10^{-9}$ |
| 150 | 4.1 x $10^{-9}$ |

Example 6

In a 100 mL boiling flask 3.764 g of DGEBA having an epoxide equivalent weight of 180.5 was combined with 1.0439 g of 4,4'-aminophenyl ether (or alternatively oxydianiline (ODA)). The mixture was heated to facilitate dissolution of the ODA into the epoxy resin. A film was made in the same manner as described in Example 1. This sample was removed from the substrates after polymerization and poling and tested using the Maker fringe technique as in Example 1. The second harmonic coefficient was calculated based on a 25 micron film thickness, an index of refraction at 532 nm of 1.63 and an index at 1.064 microns of 1.60. The calculated value for $d_{33}$ was at least 1 x $10^{-9}$ esu.

Example 7

The solution of epoxy resin and curing agent in propylene glycol methyl ether used in Example 5 was used to coat a standard microscope slide. It was polymerized in the same manner as described in Example 5. Without further treatment the coated slide was tested for third harmonic generation capabilities using the Maker fringe technique. The sample was illuminated with a pulsed light source having a wavelength of 1.9 microns focused on the sample. The sample was mounted on a computer controlled rotation stage and within a vacuum cell to reduce background third harmonic. The transmitted light was filtered to remove wavelengths other than the generated third harmonic. This filtered radiation was detected by a photomultiplier and averaged by a boxcar. The averaged output of the boxcar was collected as a function of the angle of incidence of the input radiation. The third harmonic susceptibility was calculated by a computer fitting of the data. The routine required the approximate indices of refraction at 1.9 microns of 1.602 and at 633 nm having an index of 1.620 and the thickness of the film was measured to be about 1.3 microns. The third harmonic susceptibility was calculated to be 8.1 x $10^{-13}$ esu or about 30 times the signal obtained from quartz.

## Claims

1. A nonlinear optical material comprising a compound exhibiting nonlinear optical properties containing per molecule (a) at least two active hydrogen atoms attached to more than one nitrogen atom which is attached to an aromatic ring and (b) at least one divalent electron-withdrawing group attached to an aromatic ring, said nonlinear optical material being represented by the following formula:

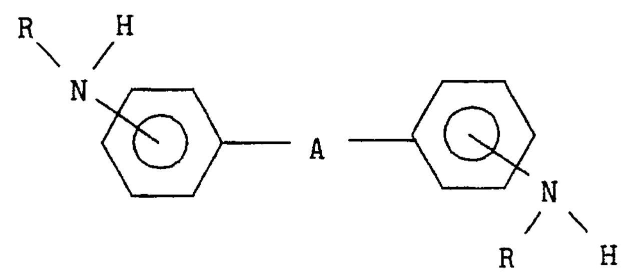

or by the following formula:

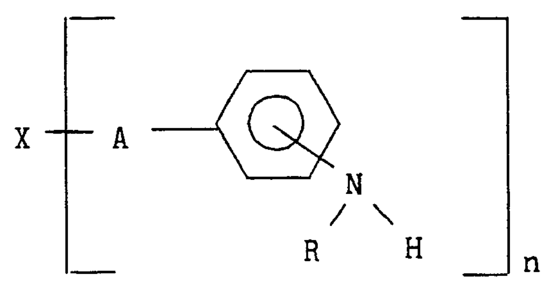

where A is a divalent electron-withdrawing group; n is 2 or 3; each R is independently a hydrogen or an aliphatic, cycloaliphatic or aromatic hydrocarbyl group having from 1 to 12 carbon atoms, with the proviso that at least two of the R groups must be active hydrogens on different nitrogen groups; and X is a divalent or trivalent organic hydrocarbon, hetero-interrupted hydrocarbon, or substituted hydrocarbon radical or

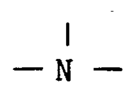.

2. The nonlinear optical material of Claim 1 wherein each divalent electron-withdrawing group is selected from the group consisting of

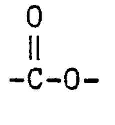 , 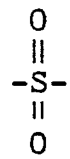 , 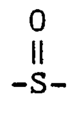 , 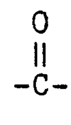 , -O- , 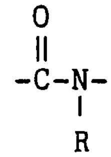 , 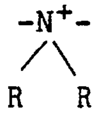 ,

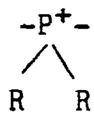 , 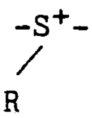 , 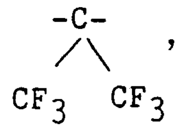 , 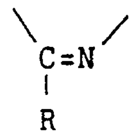 , -N=N- .

3. The nonlinear optical material of Claim 2 wherein A is $SO_2$ or CO and R is hydrogen.

4. A nonlinear optical composition comprising the reaction product of:
(A) at least one compound containing an average of more than one epoxide group per molecule; and
(B) at least one curing agent for compound (A) whereby at least a portion of said curing agent (B) is at least a first curing agent which contains per molecule (a) at least two active hydrogen atoms attached to more than one nitrogen atom which is attached to an aromatic ring and (b) at least one divalent electron-withdrawing group per molecule.

5. The composition of Claim 4 wherein the first curing agent is a compound having the following formula:

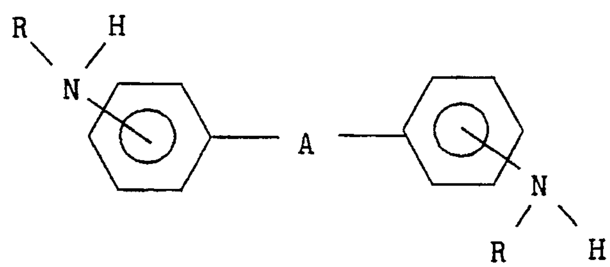

or is a compound having the following formula:

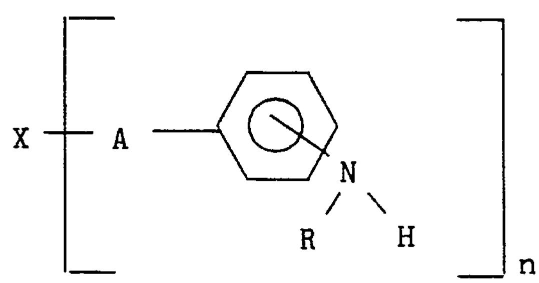

where A is a divalent electron-withdrawing group; n is 2 or 3; each R is independently a hydrogen, or an aliphatic, cycloaliphatic or aromatic hydrocarbyl group having from 1 to 12 carbon atoms with the proviso that at least two of the R groups must be active hydrogens on different nitrogen groups; and X is a divalent or trivalent organic hydrocarbon, hetero-interrupted hydrocarbon, or substituted hydrocarbon radical or

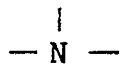 .

6. The composition of Claim 5 wherein the divalent electron-withdrawing group is selected from the group consisting of

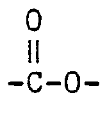 , 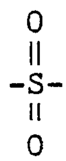 , 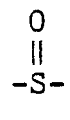 , 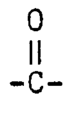 , -O- , 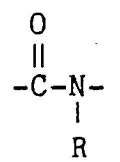 , 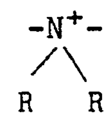 ,

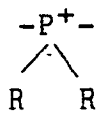 , 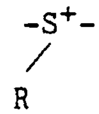 , 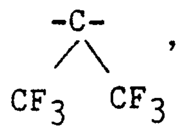 , 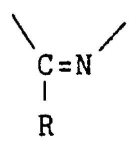 , -N=N- .

7. The composition of Claim 5 wherein A is S02 or CO and R is hydrogen.

8. The composition of Claim 4 wherein curing agent (B) includes a second curing agent selected from the group consisting of amines, amides, sulfides, anhydrides and combinations thereof.

9. The composition of Claim 8 wherein the second curing agent is an aromatic amine which exhibits a nonlinear optical response.

10. The composition of Claim 4 wherein component (A) is an epoxy compound containing an average of more than one glycidyl group per molecule selected from the group consisting of glycidyl ethers, glycidyl esters and glycidyl amines.

11. The composition of Claim 10 wherein the glycidyl ether is a glycidyl ether of bisphenol or substituted bisphenol, or is a glycidyl ether of bisphenol A.

12. The composition of Claim 8 wherein the amount of the first curing agent present in the polymeric material is from 0.1 to 100 percent and the amount of the second curing agent present in the polymeric material is from 99.9 to zero percent based on the total amount of component (B).

13. The composition of Claim 4 including a catalyst selected from the group consisting of tertiary amines, imidazoles, phosphonium compounds, ammonium compounds, sulfonium compounds, and mixtures thereof.

14. A process for preparing a nonlinear optical material comprising applying a stress to a compound exhibiting nonlinear optical properties containing per molecule (a) at least two active hydrogen atoms attached to more than one nitrogen atom which is attached to an aromatic ring and (b) at least one divalent electron-withdrawing group.

15. A process for preparing a nonlinear optical composition comprising applying a stress to the reaction product of:
(A) at least one compound containing an average of more than one epoxide group per molecule; and
(B) at least one curing agent for compound (A) whereby at least a portion of said curing agent (B) is at least a first curing agent which contains per molecule (a) at least two active hydrogen atoms

attached to more than one nitrogen atom which is attached to an aromatic ring and (b) at least one divalent electron-withdrawing group;

whereby the stress applied to the reaction product is sufficient to induce a net orientation in moieties of the first curing agent in the product.

**16.** The process of Claim 15 wherein the first curing agent is represented by the following formula:

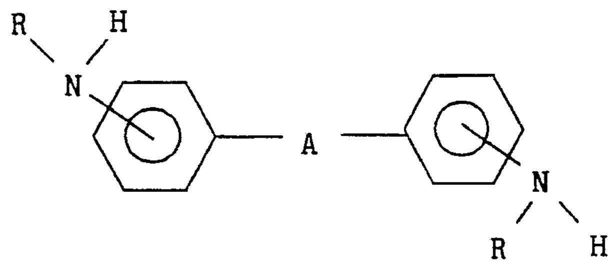

or is represented by the following formula:

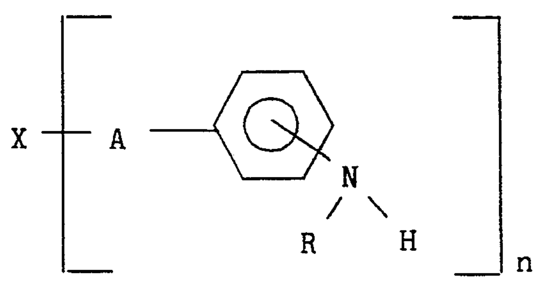

where A is a divalent electron-withdrawing group; n is 2 or 3; each R is independently a hydrogen or an aliphatic, cycloaliphatic or aromatic hydrocarbyl group having from 1 to 12 carbon atoms, with the proviso that at least two of the R groups must be active hydrogens on different nitrogen groups; and X is a divalent or trivalent organic hydrocarbon, hetero-interrupted hydrocarbon, or substituted hydrocarbon radical or

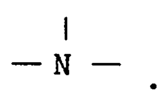

**17.** The process of Claim 14 or 15 wherein the divalent electron-withdrawing group is selected from the group consisting of

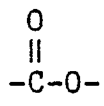 , 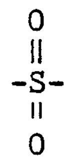 , 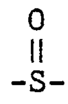 , 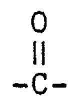 , -O- , 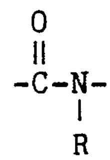 , 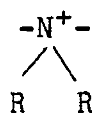 ,

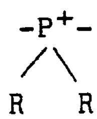 , 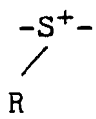 , 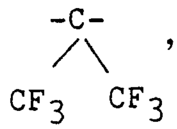 , 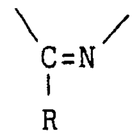 , -N=N- .

18. The process of Claim 17 wherein the divalent electron-withdrawing group A is $SO_2$ or CO and R is hydrogen.

19. The process of Claim 15 wherein curing agent (B) includes a second curing agent selected from the group consisting of amines, amides, sulfides, anhydrides and combinations thereof.

20. The process of Claim 19 wherein the second curing agent is an aromatic amine which exhibits a nonlinear optical response.

21. The process of Claim 15 wherein component (A) is an epoxy compound containing an average of more than one glycidyl group per molecule selected from the group consisting of glycidyl ethers, glycidyl esters and glycidyl amines.

22. The process of Claim 21 wherein the glycidyl ether is a glycidyl ether of bisphenol or substituted bisphenol, or is a glycidyl ether of bisphenol A.

23. The process of Claim 19 wherein the amount of the first curing agent present in the polymeric material is from 0.1 to 100 percent and the amount of the second curing agent present in the polymeric material is from 99.9 to zero percent based on the total amount of component (B).

24. The process of Claim 15 including a catalyst selected from the group consisting of tertiary amines, imidazoles, phosphonium compounds, ammonium compounds, sulfonium compounds, and mixtures thereof.

25. The process of Claim 14 or 15 wherein the stress applied is through an external field selected from the group comprising electric, magnetic and mechanical stress fields.

26. A process for preparing a nonlinear optical material comprising substantially simultaneously
    (i) polymerizing a mixture of:
        (A) at least one compound containing an average of more than one epoxide group per molecule; and
        (B) at least one curing agent for compound (A) whereby at least a portion of said curing agent (B) is at least a first curing agent which contains per molecule (a) at least two active hydrogen atoms attached to more than one nitrogen atom which is attached to an aromatic ring and (b) at least one divalent electron-withdrawing group; and
    (ii) applying an electric field to the mixture to form a material having nonlinear optical properties.

27. A process for preparing a nonlinear optical material comprising substantially simultaneously
    (i) applying an electric field to the reaction product of:
        (A) at least one compound containing an average of more than one epoxide group per molecule, and
        (B) at least one curing agent for compound (A) whereby at least a portion of said curing agent (B) is at least a first curing agent which contains per molecule (a) at least two active hydrogen atoms

attached to more than one nitrogen atom which is attached to an aromatic ring and (b) at least one divalent electron-withdrawing group; and

(ii) thermally annealing the reaction product for a period of time to form a material having nonlinear optical properties.

**28.** An article having nonlinear optical properties comprising a substrate coated with the polymeric material of Claim 1 or 4.

**29.** A particle, film, fiber or sheet of the material of Claim 1 or 4.

**30.** A device having the nonlinear optical material of Claim 1 or 4 incorporated therein.

**31.** A waveguide having as one component a nonlinear optical material of Claim 1 or 4.

**32.** The nonlinear optical material of Claim 2, 5, or 16 wherein the amine is in the para position relative to the electron-withdrawing group A.